# EUROPÄISCHE PATENTANMELDUNG

(11) **EP 1 475 853 A1**
(43) Veröffentlichungstag der Anmeldung: **10.11.2004**
(21) Anmeldenummer: 03023077.5
(22) Anmeldetag: 14.10.2003
(51) Int. Cl.: H01M 2/10

(54) **Flexible Energieträger-Systeme für mobile elektrische Geräte**

(30) Priorität: 08.05.2003 DE 10320601
(71) Anmelder: Liedtke, Rainer K., Dr., 82027 Grünwald (DE)
(72) Erfinder: Liedtke, Rainer K., Dr., 82027 Grünwald (DE)
(74) Vertreter: Leson, Thomas Johannes Alois, Dipl.-Ing.

(57) **Zusammenfassung**

Die Erfindung betrifft flexible Energieträger-Systeme für mobile elektrische Geräte, insbesondere zur Verbesserung der Effizienz und Erhöhung der Anwendungsvariabilität eines mobilen Einsatzes von Energiequellen. Gegenüber bisherigen starren Energieträgern sind die flexiblen Energieträger-Systeme auch variabel für unterschiedliche mobile Stromverbraucher einsatzfähig. Ihre technische Implementierung m mobile Verbraucher erfordert für diese zudem einen geringeren Raumbedarf und nicht die Notwendigkeit spezifischer konstruktiver Anpassungen.

## Beschreibung

Die Erfindung betrifft flexible Energieträger-Systeme für mobile elektrische Geräte, insbesondere zur besseren Effizienz und höheren Einsatzvariabilität des mobilen Einsatzes von Energiequellen.

Es ist bekannt, daß elektrisch betriebene mobile Gebrauchsgegenstände wie beispielsweise Mobiltelefone, Armbanduhren, Laptops, Kameras, Radios, TV, elektronische Messgeräte, kosmetische Hilfsgeräte, beispielsweise Rasierapparate, medizinische Hilfsgeräte, beispielsweise Messgeräte für Blutdruck, Puls und Blutzucker, sowie zahlreiche elektrische Spielzeuge für ihre Stromversorgung sowie abrufbereite Speicherung ihrer elektrischen Energie Batterien benötigen. Diese sind daher in solchen Geräten auch direkt implementiert. Bekannt ist, daß derzeitige Batterien, wie auch Akkumulatoren, mechanisch starre Bestandteile sind, die in den durch sie versorgten Gebrauchsgegenständen einen erheblichen Raumbedarf erfordern und zudem schwer und sperrig sind. Allen batterieversorgten Geräten ist gemeinsam, daß bei ihnen die Einbringung einer mobilen Energiequelle konstruktionsmässige Berücksichtigung erfordert wobei deren physische Unterbringung teils einen erheblichen Raum im Gehäuse einnimmt. Dies bedingt für den Gebrauchsgegenstand einen höheren Materialaufwand, größere Abmessungen und Gewichtszunahme. Zudem erfordert die Implementierung starrer Batterien bei neuen Geräten stets einen vermehrten Planungsaufwand in der Konstruktion. Ausserdem ist die Energieversorgung für jedes Gerät individuell spezifiziert. Daher benötigt jedes Gerät somit eine spezielle Austattung an Batterien, womit auch eine hohe Zahl unterschiedlicher Batterien erforderlich wird.

Eine Flexibilisierung mobil einsetzbarer Energiequellen mittels der diese leichter und vielseitiger an bestehende mobile Systeme angepasst werden können, stellt daher eine deutliche technische Verbesserung dar. Eine diesbezüglich Lösung erforderte aber, daß die dazu eingesetzten Materialien über geeignete mechanische und physikochemische Eigenschaften verfügen, beispielsweise über elastische oder plastische Elastizität. Dies ist aber mit den bisher bekannten technischen Batterie-Materialien nicht erreichbar. Diese stellen somit weiterhin mechanisch starre Systeme mit den aufgeführten Nachteilen dar. Daher ist bei den bestehenden mobilen Energieversorgungstechniken noch keine diesbezüglich ausreichend bedarfsgerechte Anpassung möglich.

Der Erfindung liegt die Aufgabe zu Grunde, eine bessere Effizienz und höhere Einsatzvariabilität des mobilen Einsatzes von Energiequellen zu erzielen.

Diese Aufgabe wird dadurch gelöst, daß flexible Energieträger-Systeme für mobile elektrische Geräte eingesetzt werden, die aus einer gemeinsamen, bandartigen und flexiblen, Trägermatrix bestehen, in der sich eine elektrische Energiequelle befindet, die aus mehreren einzeln funktionsfähigen und miniaturisiert plättchenartig flächig ausgebildeten Energie-Segmenten besteht, die in ihrer Gesamtheit ein mechanisch flexibles und elektrisch abgestimmtes integriertes Netzwerk darstellen, und wobei die enthaltene elektrische Energie über hierzu ausgebildete reversible Verbindungen an mobile elektrische Stromverbraucher abgeführt werden kann.

In einer weiteren Ausbildung der Erfindung sind, um den praktischen Einsatz zu verbessern und auszuweiten, die gemeinsame Trägermatrix und die technisch aktiven Bestandteile aus solchen Stoffen zusammengesetzt, die mechanisch elastische oder plastische Eigenschaften besitzen, die elektrisch leitende oder magnetische Eigenschaften besitzen und die nicht-metallische natürliche oder chemisch-synthetische Polymere oder metallische Materialien sind.

In einer weiteren Ausbildung der Erfindung sind, um den praktischen Einsatz zu verbessern und auszuweiten, die plättchenartig flächigen Energie-Segmente in ihren Flächenabmessungen rund, oval, rechteckig oder mehreckig ausgebildet.

In einer weiteren Ausbildung der Erfindung werden, um den praktischen Einsatz zu verbessern und auszuweiten, solche flexiblen Energieträger-Systeme eingesetzt, die über Vorrichtungen verfügen, die eine elektrische Wiederaufladung der in ihnen enthaltenen Batterien ermöglichen.

In einer weiteren Ausbildung der Erfindung werden, um den praktischen Einsatz zu verbessern und auszuweiten, solche flexiblen Energieträger-Systeme eingesetzt, bei denen die elektrische Wiederaufladung der enthaltenen Batterien über zusätzliche Vorrichtungen zur Energiegewinnung erfolgt, inbesondere durch Ausstattung mit Solarzellen, piezoelekrisch arbeitenden Vorrichtungen, Thermoelementen, chemischen Brennstoffzellen, Vorrichtungen für induktive Aufnahme und Wandlung statischer Elektrizität oder elektromagnetischer Effekte oder für mechanische Reibungseffekte.

In einer weiteren Ausbildung der Erfindung erfolgt, um den praktischen Einsatz zu verbessern und auszuweiten, eine Kontrolle der Energieabgabe über einen implementierten Mikrocontroller, wobei dies als open-loop Steuertechnik oder über eine durch Sensoren rückgekoppelte closed-loop Technik erfolgt.

In einer weiteren Ausbildung der Erfindung sind, um den praktischen Einsatz zu verbessern und auszuweiten, in den flexiblen Energieträger-Systemen die segmentierten Batterien oder die Module aus mehreren Segmenten so mit integrierten Steckverbindungen oder Flansch-Verbindungen ausgestattet, daß über diese weitere Segmente oder Module mechanisch angefügt oder diese auch wieder entfernt werden können.

In einer weiteren Ausbildung der Erfindung erfolgt, um den praktischen Einsatz zu verbessern und auszuweiten, die reversible Kopplung mit dem Stromverbraucher mittels magnetischer oder mechanischer Vorrichtungen oder durch Kombinationen hieraus, , insbesondere durch flache Steck- und Flansch-Vorrichtungen

In einer weiteren Ausbildung der Erfindung werden, um den praktischen Einsatz zu verbessern und auszuweiten bei den flexiblen Energieträger-Systemen auf einer oder beiden Aussenseiten der Trägermatrix Adhäsivschichten aufgetragen, die eine reversible chemische oder physikalische Haftung an Oberflächen ermöglichen.

In einer weiteren Ausbildung der Erfindung werden, um den praktischen Einsatz zu verbessern, die Leiterbahnen zwischen den Batterie-Segmenten entweder gefaltet, spiralförmig oder auch als elektrisch leitende elastische oder plastische Polymere ausgebildet sind, daß für sie ein Längenausgleich bei Dehnungen, Torsionen oder Stauchungen besteht.

In einer weiteren Ausbildung der Erfindung werden, um den praktischen Einsatz zu verbessern und auszuweiten, zwischen den einzelnen Batterie-Segmenten in Höhe der diese verbindenden Leiterbahnen durch chemische oder physikalische Einwirkungen solche Verdünnungen der Trägermatrix vorgenommen, daß diese als vorgefertigte Faltzonen eine bessere Knickbarkeit oder mäandrische Stapelbarkeit ermöglichen.

In einer weiteren Ausbildung der Erfindung sind, um den praktischen Einsatz zu verbessern und auszuweiten, in die flexiblen Energieträger-Systeme solche technischen Vorrichtungen fest integriert oder mit diesen austauschbar kombiniert, über die mobile Stromverbraucher mittels Steckkontakten an die Energie des Energieträger-Systems angeschlossen werden können.

In einer weiteren Ausbildung der Erfindung sind, um den praktischen Einsatz zu verbessern und auszuweiten, in die flexiblen Energieträger-Systeme solche technischen Vorrichtungen mit Mikroprozessoren sowie weiteren elektronischen Hilfsmassnahmen direkt integriert oder mit diesen austauschbar kombiniert, die bei einem ankoppeln unterschiedlicher Stromverbraucher auch jeweils deren individuelle Stromversorgung detektieren und individuell einstellen.

In einer weiteren Ausbildung der Erfindung sind, um den praktischen Einsatz zu verbessern und auszuweiten, in die flexiblen Energieträger-Systeme solche Art mechanische Vorrichtungen direkt integriert oder mit diesen so kombiniert, über die funktionsfähige elektrische Systeme insgesamt in einem Stück sowie auch wieder austauschbar, an die Energie des Trägersystems angeschlossen werden, ohne daß hierzu bei diesen noch weitere Verbindungen über flexible Leitungen erforderlich sind.

In einer weiteren Ausbildung der Erfindung werden, um den praktischen Einsatz zu verbessern und auszuweiten, solche flexiblen Energieträger-Systeme eingesetzt, die anwendungsfertig in flexible Streifen aus natürlichen Materialien oder chemisch-synthetischen Polymeren eingebettet, eingeschweisst, eingeklebt, einlaminiert oder eingedeckelt sind, und diese Streifen reversibel in vorgefertigte Schlitze oder sonstige Kavitäten von Trägervehikeln der Stromverbaucher eingeführt sind.

In einer weiteren Ausbildung der Erfindung sind, um den praktischen Einsatz zu verbessern und auszuweiten, die flexiblen Energieträger-Systeme anwendungsfertig in separaten Karten oder Platinen aus natürlichen Materialien oder chemisch-synthetischen Polymeren planar in einer Schicht oder zu mehreren übereinander liegenden Schichten gefaltet aufgebracht, eingebettet, eingeschweisst, eingeklebt, einlaminiert oder eingedeckelt.

In einer weiteren Ausbildung der Erfindung werden, um den praktischen Einsatz zu verbessern und auszuweiten, die flexiblen Energieträger-Systeme in solche Vorrichtungen integriert oder als solche Vorrichtungen eingesetzt, die bandartig als Armbänder, Uhrarmbänder, Fussbänder, Halsbänder, Gürtel, Trägergurte, Textilien oder Teile von Textilien, Polsterungen, Bandagen, Binden, Pflaster oder pflasterähnliche Vorrichtungen ausgestaltet sind.

In einer weiteren Ausbildung der Erfindung werden, um den praktischen Einsatz zu verbessern und auszuweiten, die flexiblen Energieträger-Systeme in solche Vorrichtungen integriert oder als solche Vorrichtungen eingesetzt, die als Griffvorrichtungen oder als Trägergurte von Transportbehältnissen oder Gebrauchsgegenständen oder damit technisch ähnlichen oder vergleichbaren Vorrichtungen ausgestaltet sind.

In einer weiteren Ausbildung der Erfindung sind, um den praktischen Einsatz zu verbessern und auszuweiten, in die flexiblen Energieträger-Systeme direkt Aktoren mit elektrischen, elektromagnetischen, mechanischen, optischen, akustischen, thermischen und chemischen Eigenschaften, sowie solche für Datenaufnahme, Datenspeicherung und Datenverarbeitung integriert, wobei diese Eigenschaften einzeln oder in Kombinationen vorliegen können.

In einer weiteren Ausbildung der Erfindung werden, um den praktischen Einsatz zu verbessern und auszuweiten, die flexiblen Energieträger-Systeme technisch mittels Rolle-zu-Rolle Produktionsverfahren hergestellt und/oder in ihrer Funktionsfähigkeit getestet.

In einer weiteren Ausbildung der Erfindung werden, um den praktischen Einsatz zu verbessern und auszuweiten, die flexiblen Energieträger-Systeme für biomedizinische, therapeutische oder diagnostische Anwendungen eingesetzt.

In einer weiteren Ausbildung der Erfindung werden, um den praktischen Einsatz zu verbessern und auszuweiten, die flexible Energieträger-Systeme im Bereich der Mikromechanik und Mikroelektronik, inbesondere zur Energieversorgung von passiven smart Chips, eingesetzt.

Die Vorteile der Erfindung ergeben sich insbesondere durch die erreichte hohe Flexibilität. Da es sich technisch um neuartig integrierte Batterienetzwerke segmentierter Mini- oder Mikro-Batterien handelt, jeweils kleinste volle Funktionseinheiten, stellen diese technisch quasi gedruckte Energie-Segmente dar. Über diese Segmentierung wird das herkömmliche Batterievolumen in der Höhe gekappt und diese ausgleichend plättchenartig flach-flächig verteilt. Dieses Vorgehen läuft daher technisch dimensionsmässig in Richtung blattartiger "zweidimensionaler Batterien", was diese zudem weiter mechanisch flexibilisiert. Durch Standardisierungen dieser Energie-Segemente und derer Anschlüsse über direkt integrierte Steckverbindungen können diese auch zu neuen Netzwerken mit bestimmten Leistungseigenschaften gekoppelt oder zu vorgegebenen und unterschiedlichen Leistungsdaten ausgebaut werden. Die Einbettung der integrierten Energie-Segmente, beispielsweise in flexible Polymere, erlaubt u.a. eine mäandrisch platzsparende Stapelung durch Faltung mehrerer Segmente oder auch Torsionen. Die Anbringung reversibler Adhäsivschichten ermöglicht Fixierung an verschiedenen Oberflächen.

Da flexible Energieträger-Systeme jedem Trägerelement eines Stromverbrauchers dimensionsmässig individuell angepasst werden können, sind sie erheblich materialund raumsparend und ermöglichen auch besseren körpernahen Zugriff. Sie eröffnen daher gegenüber herkömmlichen starren Energieträgern neue technische Anwendungen, beispielsweise im biomedizinischen Bereich, bei denen flache mobile Ausgestaltungen der Energiequelle erforderlich sind, beispielweise für elektrisch betriebene Pflastersysteme zu therapeutischen oder diagnostischen Zwecken.

Da die flexiblen Energieträger-Systeme interaktiv mit mobilen Stromverbrauchern arbeiten ist ein Hauptgebiet die Kopplung mit bereits bestehenden Systemen. Dies kann nun erfolgen, ohne daß noch in deren Konstruktion technisch eingegriffen werden muss. Solcherart mobiler Anwendungen sind beispielsweise batteriegetriebene Verbrauchsgegenstände wie u.a. Armbanduhren. In diesem Falle wird dann aber die elektrische Energie nicht mehr wie bisher aus dem im Gehäuse befindlichen Kontrollbereich der Uhr geliefert, sondern kommt nunmehr aus einem die Uhr fixierenden Armband, das hier aber auch gleich noch für andere Energiezwecke zur Verfügung stehen kann. Weitere Anwendungsbeispiele, für als Armbänder ausgebildete flexible Energieträgersysteme, sind u.a. die Ankopplung von mobilen elektronischen Messgeräten, von in Textilien implementierten elektronischen Vorrichtungen, beispielsweise Heizvorrichtungen für Kleidungsteile, von Mobiltelefonen, mobilen Radios oder mobilen medizinischen Diagnosegeräten über mit Steckverbindungen versehene Leitungen

Ein besonderer Vorteil ist, daß alle solchen unterschiedlichen mobilen Stromverbraucher nun erstmals durch eine Art "Energieband" über einen gemeinsamen Energielieferanten versorgt werden können. Bisher ist für jeden unterschiedlichen mobilen Stromverbraucher eine unterschiedliche Energieversorgung erforderlich, die in diesem mit besonderem technischem Aufwand auch physisch implementiert ist. Dies kann daher nun universell durch ein flexibles Energieträger-System erfolgen. Dieses kann zudem überall getragen werden, ist damit überall verfügbar, was auch den Vorteil von Unabhängigkeit gegenüber unterschiedlichen Steckernormen, beispielweise bei Reisen, hat. Darüber hinaus kann ein flexibles Energieträger-System aber auch wahlweise individuell und raumsparend an oder in Verbrauchergeräten fixiert werden.

Ein weiterer technischer Vorteil ist, daß die flexiblen Energieträger-Systeme mit bereits üblichen Produktionsmitteln in großen Zahlen wirtschaftlich, exakt genormt sowie reproduzierbar gefertigt sowie auch anwendungsbezogen variabel dimensioniert werden können. Durch die flexible Ausgestaltung sind auch ökonomische Rolle-zu-Rolle Produktionsformen möglich, mit denen die flexiblen Energieträger-Systeme zudem automatisiert in-process auf Funktionsfähigkeit getestet werden können. Solch eine Produktionsform ist mit üblichen starren Energieträgern nicht möglich.

Prinzipiell kann die Erfindung mit praktisch allen Form derzeitiger Batterietechnologien angewandt werden, die für einen mobilen Einsatz konzipiert sind. Doch ist sie im Bereich mobiler Geräte besondere für jene geeignet, die über hohe Kapazität verfügen, daher insbesodere für die derzeit in dort führenden Lithium Polymer-Technologien. Weitere dazu geeignete Technologien sind auch die Brennstoffzellen.

Technische Ausführungsbeispiele der Erfindung sind, ohne es auf diese Beispiele beschränken zu wollen, nachfolgend erläutert:

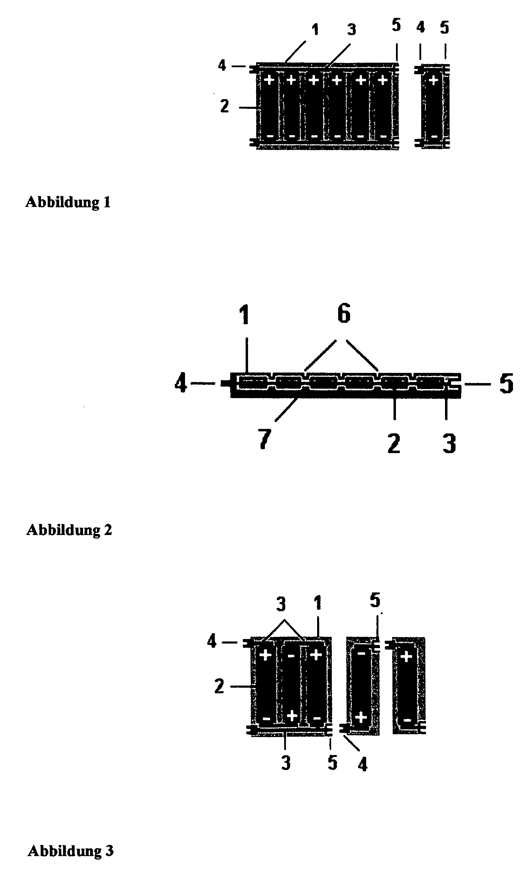

**Abbildung 1** zeigt eine schematische Aufsicht des Grundaufbaus. Dabei besteht der gemeinsame Energieträger hier aus einer flexiblen bandförmigen Polymer-Matrix (1) in der, in gliederartig-segmentierter Form, eine bestimmte Anzahl in sich funktionsfähiger Einzelbatterien (2) enthalten ist, beispielsweise ultraflache aufgeklebte oder aufgedruckte Lithium-Mikrobatterien, von denen hier nur ein zahlenmässiger Ausschnitt dargestellt ist. Alle Energie-Segmente sind ihrerseits durch aufgedruckte Leiterbahnen (3) elektrisch leitend in Kontakt. Diese können entweder flexibel ausgetattet sein oder solche Leiterbahnführung haben, daß sie einen Distanzausgleich gegen Dehnungen, Stauchungen oder Torsionen ermöglichen. Die Verschaltung kann, je nach Anwendungszweck, als parallele oder serielle Schaltung ausgestaltet sein. In diesem Falle ist eine Parallelschaltung dargestellt. Über eine integrierte mechanische Kupplung (4), die als Magnet-Kupplung, Knopfdruck-Kupplung oder üblicher Stecker ausgebildet sein kann, ist das flexible Energieträger-System reversibel mit dem Stromverbraucher verbunden. Auf der gleichen Seite, oder wie hier im Beispiel auf der Gegenseite, besteht die Möglichkeit direkter Integration einer Buchse als passivem Kupplungelement (5). Über diese kann das Energieträger-System durch mechanische Anbringung weiterer Energie-Segmente verlängert, damit energetisch individuell ausgebaut werden. Insgesamt stellt daher dieses Band mit den Energiesegmenten ein technisch vorgefertigtes integriertes Energiemodul mit allen notwendigen Funktionskomponenten dar, das segmentartig ausgebaut werden kann. Infolge der reversiblen Kupplung kann ein angeschlossener Stromverbraucher auch durch eine andere stromverbrauchende Vorrichtung, ausgetauscht werden. Die segmentierten Batterien (2) können gebenenfalls auch als Akkumulatoren ausgelegt sein.
**Abbildung 2** zeigt im schematischen Querschnitt den gleichen prinzipiellen Aufbau mit der Trägermatrix (1) und den jeweils ersten Batterie-Segmenten (2), die untereinander durch Leiterbahnen verbunden sind (3), sowie den integrierten Stecker (4) und eine auf der Gegenseite integrierte Buchse (5). Durch Einpressungen an den Stellen der Leiterbahnverbindungen sind dort in der Matrix Querschnittverdünnungen (6) angebracht. Hierdurch ist an diesen Stellen verbesserte Faltbarkeit und Knickfähigkeit erreicht, beispielsweise für eine mäandrische Faltung und damit schichtweise Stapelbarkeit einzelner Energie-Segmente. Weiterhin befindet sich hier an der Unterseite eine reversible Adhäsivschicht (7), die eine mechanische Fixierung des Trägerbandes an Verbrauchsgegenstände ermöglicht. Mit einer beidseitigen Adhäsivschicht kann wiederum das Trägerband, beispielweise bei einer gefalteten Struktur, mechanisch stabiler zusammengehalten werden. Die Gesamtdicke solcherart flexibler Energieträger-Systeme liegt dabei deutlich unter 1 mm und ggfs. bis in den Mikrometerbereich. Dabei können die Energieträger-Systeme je nach technischer Anwendung entweder insgesamt mechanisch in eine vorgefertigte Kavität einer anderen Matrix, beispielweise der eines Stromverbrauchers, eingeschoben werden, oder auch gebrauchsfertig in einer Polymermatrix fest eingebettet, beispielsweise einer separaten und mobilen Karte, oder auch sandwichartig zwischen zwei getrennten Deckschichten eingefügt werden. Die dazu eingesetzten Matrixmaterialen können hierbei, je nach Anwendungszweck, plastisch elastisch sein oder auch eine elastische Elastizität besitzen.
**Abbildung 3** zeigt, wie in Abbildung 1, eine schematische Aufsicht des Aufbaus, hier aber für eine serielle Schaltung, bei der der Verlauf der Leiterbahnen (3) zwischen den Segment-Batterien anders geführt werden muss als im Beispiel von Abbildung 1 und woraus auch das Design für die Anbringung der Stecker (4) und Buchsen (5) anders ausfällt. Ebenfalls kann auch hier durch weitere Segmente mechanisch ausgebaut werden.

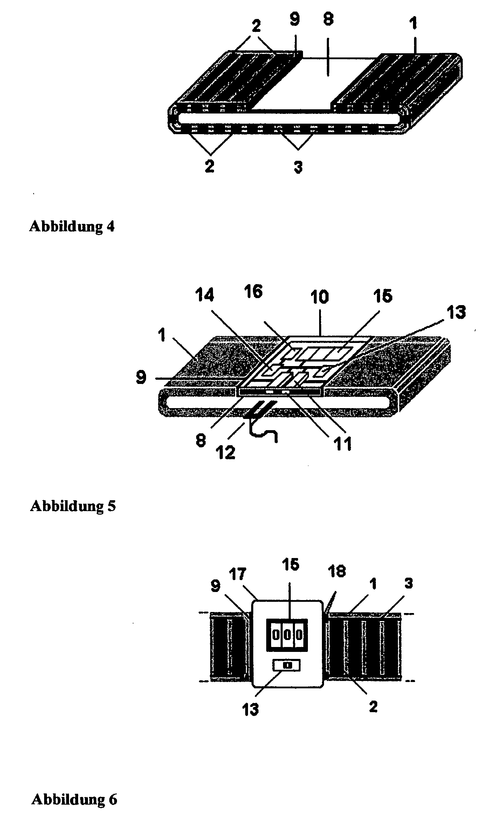

**Abbildung 4** zeigt eine perspektivische Darstellung eines flexiblen Energieträger-Systems als ringförmig geschlossene Vorrichtung, mit den darin enthaltenen Segment-Batterien (2) und deren Leiterbahnen (3), wobei sich zwischen den beiden Enden des Bandes eine Trägerplatte (8) befindet, die seitlich elektrisch leitende Begrenzungen (9) hat, und die gleichzeitig als elektrisches Kupplungselement für das Energieträger-System dienen.
**Abbildung 5** zeigt eine perspektivische Darstellung des flexiblen Energieträger-Systems als ringförmig geschlossene Vorrichtung, mit einer auf die Trägerplatte (8) eingeschobenen Vorrichtung (10), die über die Seitenbegenzung der Trägerplatte (9) mit dem Energieträger-System gekoppelt ist. Diese als separates Modul ausgestattete Vorrichtung kann dabei als Stromverteiler für verschiedene externe Stromverbraucher dienen. Der externe Stromverbraucher wird über eine in dem Modul enthaltene Strombuchse (11) mit seinem Stecker (12) angeschlossen. Das Modul enthält zudem einen Aktivierungschalter (13) und einen Mikroprozessor (14), beispielsweise zur Ermittlung, Identifikation und Anpassung unterschiedlicher Stromerverbraucherdaten bei unterschiedlichen mobilen Verbrauchern. Weiterhin enthält es optional ein flaches Display (15) sowie eine Schnittstelle zur drahtlosen Ansteuerung, beispielsweise über Infrarot (16). Somit lassen sich hier über nur ein Energieträger-System verschiedene mobile Stromverbraucher, beispielsweise Mobiltelefon, Radio, DC-Player bedarfsweise mit Strom versorgen. Bei Anbringung mehrerer Buchsen im Modul können gleichzeitig auch mehrere Stromverbraucher versorgt werden.
**Abbildung 6** zeigt schematisch die Aufsicht eines flexiblen Energieträger-Systems wobei der Stromverbraucher (17), hier beispielweise eine Armbanduhr mit Display (15) und Schalter (13), insgesamt auf die Trägerplatte eingeschoben wurde und über deren Seitenbegenzung (9) mit dem Energieträger-System verbunden ist, wobei hier eine starre elektrische Kopplung (18) für Stromzufluss sorgt. Anders als in Abbildung 5 liegt hier somit eine direkte mechanische Verbindung mit dem Verbraucher vor. Das Energieträger-System übernimmt hier dabei gleichzeitig die Funktion des früheren Uhrarmbandes als Träger.

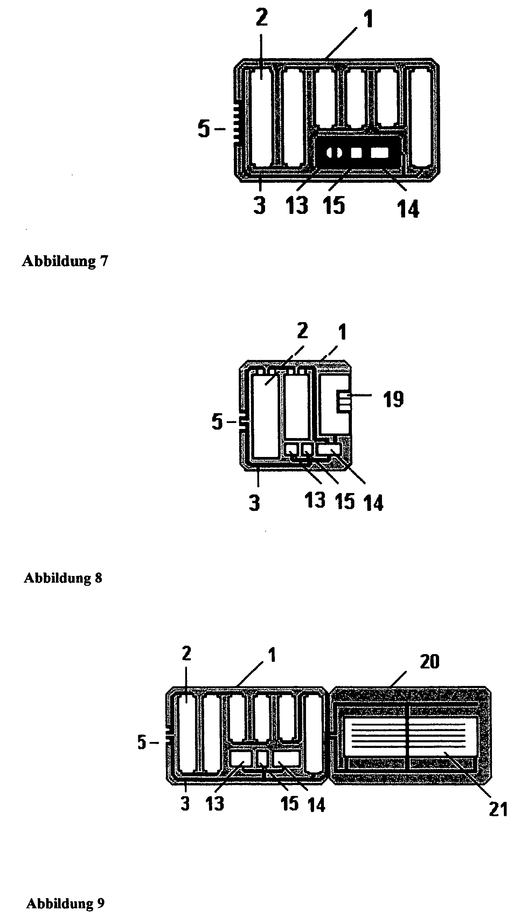

**Abbildung 7** zeigt schematisch in der Aufsicht eine flexiblen Energieträger-Systems in Form einer mobilen Karte. In dieser befindet sich ein in einer Trägermatrix (1) eingebettetes komplexes Energiesystem, mit dem Netzwerk der unteinander über Leiterbahnen (3) verbundenen Batterien (2) und einem aus diesem kommenden mehrpoligen Stecker (5). Weitehin integriert sind ein Aktivierungsschalter (13), ein Mikroprozessor (14) als Kontroller sowie Minidisplay (15), das den aktuellen Energie-Status der Karte angibt. Die Dicke dieses in den Flächen-Ausmassen etwa Kredikartengrossen Energie-Systems, das beidseitig zudem noch von einer Schutzschicht aus Polymermaterial umgeben ist, kann je nach Leistungsbedarf und Anwendungszweck von 0,5 bis zu 5 mm liegen. Dies ist schon dadurch möglich, daß beisielweise Segmentierte netwerke mit Lithium-Polymer Batterien z.B. flexibel määandrisch in nur 0,1 mm dicken Einzelschichten ausgelegt werden können. Die Energie-Karte kann dabei beispielsweise in eine schlitzartige Kavität eines mobilen Verbrauchers eingeschoben wedren und dockt dann über den Stecker (5) im Verbraucher elektrisch an. Über den Mikroprozessor können die Leistungsdaten des jeweils angekoppelten Verbrauchers ermittelt und hiernach intern automatisch adaptiert werden. Gleichzeitig stimmt der Mikroprozessor auch, im Sinne eines Powermanagement, die internen Leistungsdaten der Batterien des Netzwerkes untereiander ab. Bei Ausbildung der Batterien als Akkumulator dient der Stecker (5) gleichzeitig auch als Verbindung zu einer Ladestation. Die Batterien könen aber auch kontaktlos, mittels Induktion geladen werden. Weiterhin kann hier aber auch alternativ der auf der Oberseite der Karte liegende Aktivierungsschalter (13), wenn er leitend ausgebildet ist, als Flansch-Andockstelle für Ladungsvorgänge aber auch als Abgabestelle für Strom dienen. Hierbei werden die Verbindunsgen dann somit nicht in eine komplementäre Kavität gegeben, sondern Stecker und Buchse werden angeflanscht und dabei ggfs. durch mechanische Vorrichtung und /oder Magnete in Position gehalten.
**Abbildung 8** zeigt schematisch in der Aufsicht ein weiteres flexibles Energieträger-System in Form einer mobilen Karte. In dieser Modifiaktion befindet sich neben dem komplexen Energiesystem, mit seinem Netzwerk unteinander über Leiterbahnen (3) verbundener Batterien (2) und einem aus diesem kommenden mehrpoligen Stecker (5), einem integrierten Aktivierungsschalter (13), dem Mikroprozessor (14) und Minidisplay (15), noch ein Sendemodul für Infarotsignale (19), mit dem die Energie-Karte, beispielweise als Türöffner für Autos, oder für sonstige Fernbedienungen, beispielsweise für TV Geräte, geeignet ist. Bei Ausbildung der Batterien als Akku dient der Stecker (5) gleichzeitig auch als Verbindung zu einer Ladestation.
**Abbildung 9** zeigt schematisch in der Aufsicht ein weiteres flexibles Energieträger-System in Form einer mobilen Karte. In dieser Modifikation ist an das Energiesystem, mit seinem Control-Panel mit Schalter (13), Mikroprozessor (14) und Minidisplay (15), eine weitere Matrixkarte (20), über eine flexible Leiterbahn (3), die mit einer Solarzelle (21) versehen ist, direkt verbunden. Das Solarmodul nimmt somit die Rolle eines integrierten Chargers ein über die das Batteriennetzwerk aufgeladen werden kann.

Diese Anordnung kann dabei, wie hier dargestellt, entweder mittels einer separaten und klappbaren Matrix (20) ausgestaltet sein, so daß diese dann die Rückseite des flexiblen Energiesystems darstellt. Gegebenfalls kann sie auch direkt auf der Rückseite der Matrix (1) angebracht sein, wobei, hier dann die Verbindungen zwischen Batterienetzwerk und Solarzelle durchkontaktiert sind. In beiden Fällen wird dann bei einem Umdrehen der Energiekarte auf diese Rückseite mit der Solarzelle und bei Exposisiton von Licht das Batterienetzwerk in dieser Lage dann kontinuierlich geladen. Im Falle ausreichenden Platzes kann die Solarzelle auch auf der Vorderseite installiert werden. Über diese Ausgestaltung kann daher im Falle einer längeren Abwesenheit von Ladestationen die Energiekarte, über den in sie integrierten Energiewandler, in den Phasen der Nichtbenutzung auch wieder extern aufgeladen werden, sowie auch bei niedrigerem Energieverbauch hierüber direkt in Dauerbetrieb gehalten werden.

Die Erfindung betrifft flexible Energieträger-Systeme für mobile elektrische Geräte, insbesondere zur Verbesserung der Effizienz und Erhöhung der Anwendungsvariabilität eines mobilen Einsatzes von Energiequellen. Gegenüber bisherigen starren Energieträgern sind die flexiblen Energieträger-Systeme auch variabel für unterschiedliche mobile Stromverbraucher einsatzfähig. Ihre technische Implementierung in mobile Verbraucher erfordert für diese zudem einen geringeren Raumbedarf und nicht die Notwendigkeit spezifischer konstruktiver Anpassungen.

## Patentansprüche

1. Flexible Energieträger-Systeme für mobile elektrische Geräte, **dadurch gekennzeichnet, daß** diese aus einer gemeinsamen, bandartigen und flexiblen, Trägermatrix bestehen, in der sich eine elektrische Energiequelle befindet, die aus mehreren einzeln funktionsfähigen und miniaturisiert plättchenartig flächig ausgebildeten Energie-Segmenten besteht, die in ihrer Gesamtheit ein mechanisch flexibles und elektrisch abgestimmtes integriertes Netzwerk darstellen, und wobei die enthaltene elektrische Energie über hierzu ausgebildete reversible Verbindungen an mobile elektrische Stromverbraucher abgeführt werden kann.

2. Flexible Energieträger-Systeme nach vorhergehendem Anspruch, **dadurch gekennzeichnet, daß** die gemeinsame Trägermatrix und die technisch aktiven Bestandteile aus solchen Stoffen zusammengesetzt sind, die mechanisch elastische oder plastische Eigenschaften besitzen, die elektrisch leitende oder magnetische Eigenschaften besitzen und die nicht-metallische natürliche oder chemisch-synthetische Polymere oder metallische Materialien sind.

3. Flexible Energieträger-Systeme nach vorhergehenden Ansprüchen, **dadurch gekennzeichnet, daß** die plättchenartig flächigen Energie-Segmente in ihren Flächenabmessungen rund, oval, rechteckig oder mehreckig ausgebildet sind.

4. Flexible Energieträger-Systeme nach vorhergehenden Ansprüchen, **dadurch gekennzeichnet, daß** diese über Vorrichtungen verfügen, die eine elektrische Wiederaufladung der in ihnen enthaltenen Batterien ermöglichen.

5. Flexible Energieträger-Systeme nach vorhergehenden Ansprüchen, **dadurch gekennzeichnet, daß** solche flexiblen Energieträger-Systeme eingesetzt werden, bei denen die elektrische Wiederaufladung der enthaltenen Batterien über zusätzliche Vorrichtungen zur Energiegewinnung erfolgt, inbesondere durch Ausstattung mit Solarzellen, piezoelekrisch arbeitenden Vorrichtungen, Thermoelementen, chemischen Brennstoffzellen, Vorrichtungen für induktive Aufnahme und Wandlung statischer Elektrizität oder elektromagnetischer Effekte oder für mechanische Reibungseffekte.

6. Flexible Energieträger-Systeme nach vorhergehenden Ansprüchen, **dadurch gekennzeichnet, daß** diese eine Kontrolle der Energieabgabe über einen implementierten Mikrocontroller besitzen, wobei dies als open-loop Steuertechnik oder über eine durch Sensoren rückgekoppelte closed-loop Technik erfolgt.

7. Flexible Energieträger-Systeme nach vorhergehenden Ansprüchen, **dadurch gekennzeichnet, daß** die segmentierten Batterien oder Module aus mehreren Segmenten so mit integrierten Steck- oder Flanschverbindungen ausgestattet sind, daß über diese weitere Segmente oder Module mechanisch angefügt oder diese auch wieder entfernt werden können.

8. Flexible Energieträger-Systeme nach vorhergehenden Ansprüchen, **dadurch gekennzeichnet, daß** die reversible Kopplung mit dem Stromverbraucher mittels mechanischer oder magnetischer Vorrichtungen oder durch Kombinationen hieraus erfolgt, insbesondere durch flache Steck- und Flansch-Vorrichtungen.

9. Flexible Energieträger-Systeme nach vorhergehenden Ansprüchen, **dadurch gekennzeichnet, daß** auf einer oder beiden Aussenseiten der Trägermatrix Adhäsivschichten aufgetragen sind, die eine reversible chemische oder physikalische Haftung an Oberflächen ermöglichen.

10. Flexible Energieträger-Systeme nach vorhergehenden Ansprüchen, **dadurch gekennzeichnet, daß** die Leiterbahnen zwischen den Batterie-Segmenten entweder gefaltet, spiralförmig oder als elektrisch leitende elastische oder plastische Polymere ausgebildet sind, daß für sie ein Längenausgleich bei Dehnungen, Torsionen oder Stauchungen besteht.

11. Flexible Energieträger-Systeme nach vorhergehenden Ansprüchen, **dadurch gekennzeichnet, daß** zwischen den einzelnen Batterie-Segmenten in Höhe der diese verbindenden Leiterbahnen durch chemische oder physikalische Einwirkungen solche Verdünnungen der Trägermatrix vorgenommen sind, daß diese als vorgefertigte Faltzonen eine bessere Knickbarkeit oder mäandrische Stapelbarkeit bewirken..

12. Flexible Energieträger-Systeme nach vorhergehenden Ansprüchen, **dadurch gekennzeichnet, daß** in diese solche technischen Vorrichtungen fest integriert oder mit diesen austauschbar kombiniert sind, über die mobile Stromverbraucher mittels Steckkontakten an die Energie des Trägersystems angeschlossen werden können.

13. Flexible Energieträger-Systeme nach vorhergehenden Ansprüchen, **dadurch gekennzeichnet, daß** in diese solche technischen Vorrichtungen mit Mikroprozessoren sowie weiteren elektronischen Hilfsmassnahmen direkt integriert oder mit diesen austauschbar kombiniert sind, die bei Ankopplung unterschiedlicher Stromverbraucher auch jeweils deren individuelle Stromversorgung detektieren und individuell einstellen.

14. Flexible Energieträger-Systeme nach vorhergehenden Ansprüchen, **dadurch gekennzeichnet, daß** in diese solche Art mechanischer Vorrichtungen direkt integriert oder mit diesen so kombiniert sind, über die funktionsfähige elektrische Systeme insgesamt in einem Stück, sowie austauschbar, an die Energie des Trägersystems angeschlossen werden, ohne daß hierzu bei diesen noch weitere Verbindungen über flexible Leitungen erforderlich sind.

15. Flexible Energieträger-Systeme nach vorhergehenden Ansprüchen, **dadurch gekennzeichnet, daß** solche bandartigen Systeme eingesetzt sind, die anwendungsfertig in flexible Streifen aus natürlichen Materialien oder aus chemisch-synthetischen Polymeren eingebettet, eingeschweisst, eingeklebt, einlaminiert oder eingedeckelt sind, und diese Streifen reversibel in vorgefertigte Schlitze oder sonstige Kavitäten von Trägervehikeln der Stromverbraucher eingeführt werden.

16. Flexible Energieträger-Systeme nach vorhergehenden Ansprüchen, **dadurch gekennzeichnet, daß** die Energieträger-Systeme anwendungsfertig in separaten Karten oder Platinen aus natürlichen Materialien oder chemisch-synthetischen Polymeren planar in einer Schicht oder zu mehreren übereinander liegenden Schichten gefaltet aufgebracht, eingebettet, eingeschweisst, eingeklebt, einlaminiert oder eingedeckelt sind.

17. Flexible Energieträger-Systeme nach vorhergehenden Ansprüchen, **dadurch gekennzeichnet, daß** diese in solche Vorrichtungen integriert oder als solche Vorrichtungen eingesetzt sind, die bandartig als Armbänder, Uhrarmbänder, Fussbänder, Halsbänder, Gürtel, Trägergurte, Textilien oder Teile von Textilien, Polsterungen, Bandagen, Binden, Pflaster oder pflasterähnliche Vorrichtungen ausgestaltet sind.

18. Flexible Energieträger-Systeme nach vorhergehenden Ansprüchen, **dadurch gekennzeichnet, daß** diese in solche Vorrichtungen integriert oder als solche Vorrichtungen eingesetzt sind, die als Griffvorrichtungen oder als Trägergurte von Transportbehältnissen oder Gebrauchsgegenständen oder damit technisch ähnlichen oder vergleichbaren Vorrichtungen ausgestaltet sind.

19. Flexible Energieträger-Systeme nach vorhergehenden Ansprüchen, **dadurch gekennzeichnet, daß** in diese Systeme auch direkt Aktoren mit elektrischen, elektromagnetischen, mechanischen, optischen, akustischen, thermischen und chemischen Eigenschaften, sowie solche für Datenaufnahme, Datenspeicherung und Datenverarbeitung integriert sind, wobei diese Eigenschaften einzeln oder in Kombinationen vorliegen können.

20. Flexible Energieträger-Systeme nach vorhergehenden Ansprüchen, **dadurch gekennzeichnet, daß** die flexiblen Energieträger-Systeme technisch mittels Rolle-zu-Rolle Produktionsverfahren hergestellt und/oder in ihrer Funktionsfähigkeit getestet werden.

21. Flexible Energieträger-Systeme nach vorhergehenden Ansprüchen, **dadurch gekennzeichnet, daß** diese auch für biomedizinische, therapeutische oder diagnostische Anwendungen eingesetzt werden.

22. Flexible Energieträger-Systeme nach vorhergehenden Ansprüchen, **dadurch gekennzeichnet, daß** diese auch im Bereich der Mikromechanik und Mikroelektronik, inbesondere zur Energieversorgung von passiven smart Chips eingesetzt werden.
